Europäisches Patentamt

European Patent Office

Office européen des brevets

(11) Publication number: **0 217 585**
**A2**

## (12) EUROPEAN PATENT APPLICATION

(21) Application number: 86307103.1

(22) Date of filing: 16.09.86

(51) Int. Cl.⁴: **C08J 5/18** , C08L 23/04 , C08J 3/22

(30) Priority: 24.09.85 GB 8523544
09.04.86 GB 8608612

(43) Date of publication of application:
08.04.87 Bulletin 87/15

(84) Designated Contracting States:
**BE DE FR GB IT NL**

(71) Applicant: **DU PONT CANADA INC.**
**Box 2200 Streetsville Postal Station**
**Mississauga Ontario L5M 2H3(CA)**

(72) Inventor: **Button, Thomas Allen**
**731 Portsmouth Avenue**
**Kingston Ontario, K7M 1W6(CA)**
Inventor: **Kelly, Peter Yates**
**24 Earl Street**
**Kingston Ontario, K7L 2G3(CA)**

(74) Representative: **Ellis, John Clifford Holgate et al**
**MEWBURN ELLIS & CO. 2/3 Cursitor Street**
**London EC4A 1BQ(GB)**

(54) **Manufacture of film from linear low density polyethylene.**

(57) A process for the manufacture of film from linear low density polyethylene, and a composition therefor, is disclosed. The process may be used to manufacture such film using apparatus that is not normally intended for and/or capable of being used with linear low density polyethylene e.g. apparatus normally used for extrusion of conventional high pressure polyethylene. The process comprises feeding to film-forming apparatus an admixture of linear low density polyethylene and a composition of a second polymer with polyethylene glycol having a MW of 1000 to 6000 and optionally an organic peroxide. The second polymer has a shear viscosity at 200°C and a shear rate of 400 sec⁻¹ of less than 30% of that of the polyethylene. The amount of polyethylene glycol is 0.01 to 1% by weight of polyethylene and second polymer.

## MANUFACTURE OF FILM FROM LINEAR LOW DENSITY POLYETHYLENE

The present invention relates to the manufacture of film from linear low density polyethylene and especially to an improved process that may permit manufacture of such film using apparatus not normally intended for and/or capable of being used with linear low density polyethylene, to compositions used in such manufacture and to other uses of such compositions.

Linear low density polyethylene is formed by the copolymerization of ethylene with higher alpha-olefins, in the presence of a coordination catalyst, especially the copolymerization of ethylene with $C_4$ -$C_{10}$ higher alpha-olefins. Such polymers have been available commercially for about twenty-five years and have now become a preferred form of low density polyethylene. Linear low density polyethylene differs in properties and processing characteristics from the more conventional high pressure polyethylene manufactured by the homopolymerization of ethylene in the presence of a free radical catalyst, even if both types of polymer have the same density and melt index; melt index is measured by the procedure of ASTM D-1238 - (condition E).

In the extrusion of film from polyethylene, it is known that conventional high pressure homopolymers of ethylene may be extruded into film using apparatus that may not be adaptable for use with linear low density polyethylene. In particular, the power requirements for the latter polyethylene are higher than those for conventional high pressure polyethylene and thus apparatus intended for use with conventional high pressure polyethylene is often not capable of being used with linear low density polyethylene. In addition, improvements in the processing of linear low density polyethylene, especially improvements that result in film of commercially acceptable quality being manufactured at higher extrusion rates would be beneficial.

Polymer blends capable of being used to incorporate organic peroxides into polyolefins in a uniform and more economical manner are disclosed in Canadian patent applications of G. White and of D.W. Boivin and R.A. Zelonka, both filed 1985 June 27. Such blends may be used to increase the rate of production of film of acceptable quality. The use of polyalkylene glycols having a molecular weight of 900 to 6000 to reduce the formation of gel streaks during the formation of polyolefin film is disclosed in Canadian Patent 961 998 of R.G. Hancock and J.W. Pendleton, which issued 1975 January 28. The use of polyethylene glycol to reduce the incidence of film breakdown is disclosed in U.S. Patent 4 013 622 of J.V. DeJuneas et al., which issued 1977 March 22.

It has now been found that improvements in the manufacture of film from linear low density polyethylene may be obtained using admixtures of polymers and a polyethylene glycol.

Accordingly, the present invention provides in a process for the manufacture of film from a polymer of ethylene, said process comprising feeding said polymer to an extruder adapted for the manufacture of film, melting said polymer and extruding molten polymer through an annular die, expanding the resultant tube of molten polymer and then cooling said tube to form film, the improvement comprising feeding to the extruder a blend comprising, in physical admixture, a major portion of particles of a polyethylene and a minor portion of particles of a composition of a second polymer with a polyethylene glycol, said polyethylene being a copolymer of ethylene and at least one $C_4$ -$C_{10}$ higher alpha-olefin and having a density of 0.910-0.930 $g/cm^3$ and a melt index of less than 10 dg/min, said second polymer being a normally solid thermoplastic polymer having a melting point of less than 185°C and having a shear viscosity of less than 30% of that of said polyethylene when measured at 200°C and a shear rate of 400 $sec^{-1}$, said composition containing 0.5 to 10 %, based on the weight of second polymer, of a polyethylene glycol having a molecular weight in the range of 1000 to 6000, the amount of said polyethylene glycol being 0.01 to 1% by weight of the amount of polyethylene and second polymer.

In a preferred embodiment of the process of the present invention, a composition of second polymer and an organic peroxide is admixed with the polyethylene.

In a further embodiment, the organic peroxide and polyethylene glycol are separately formed into compositions with second polymer, the second polymers of the compositions being the same or different.

In another embodiment, the organic peroxide and polyethylene glycol are formed into the same composition with the second polymer.

In a still further embodiment, the second polymer is a homopolymer of ethylene or a copolymer of ethylene and at least one $C_4$ - $C_{10}$ higher alpha-olefin.

The present invention also provides a process for the manufacture of film from a polymer of ethylene, comprising the steps of:

(a) feeding to an extruder adapted for the manufacture of film a blend comprising, in physical admixture, a major portion of particles of a polyethylene and a minor portion of particles of a composition of a second polymer with a polyethylene glycol, said polyethylene being a copolymer of ethylene and at least one $C_4$ -$C_{10}$ higher alpha-olefin and having a density of 0.910-0.930 g/cm³ and a melt index of less than 10 dg/min, said second polymer being a normally solid thermoplastic polymer having a melting point of less than 185°C and having a shear viscosity of less than 30% of that of said polyethylene when measured at 200°C and a shear rate of 400 sec⁻¹, said composition containing 0.5 to 10%, based on the weight of second polymer, of a polyethylene glycol having a molecular weight in the range of 1000 to 6000, the amount of said polyethylene glycol being 0.01 to 1% by weight of the amount of polyethylene and second polymer;

(b) melting said admixture and extruding the molten polymer composition so obtained through an annular die;

(c) expanding the resultant tube of molten polymer composition so obtained; and

(d) cooling said tube so as to form film.

The present invention further provides a blend comprising, in physical admixture, a major portion of particles of a polyethylene and a minor portion of particles of a composition of a second polymer with a polyethylene glycol, said polyethylene being a copolymer of ethylene and at least one $C_4$ - $C_{10}$ higher alpha-olefin and having a density of 0.910-0.930 g/cm³ and a melt index of less than 10 dg/min, said second polymer being a normally solid thermoplastic polymer having a melting point of less than 185°C and having a shear viscosity of less than 30% of that of said polyethylene when measured at 200°C and a shear rate of 400 sec⁻¹, said composition containing 0.5 to 10%, based on the weight of second polymer, of a polyethylene glycol having a molecular weight in the range of 1000 to 6000, the amount of said polyethylene glycol being 0.01 to 1% by weight of the amount of polyethylene and second polymer.

The present invention additionally provides a concentrate composition comprising 90-99% by weight of an ethylene polymer selected from the group consisting of homopolymers of ethylene and copolymers of ethylene and at least one $C_4$ -$C_{10}$ higher alpha-olefin, and mixtures thereof, said polymer having a density of 0.91-0.97 g/cm³ and a melt index of 20-200 dg/min., preferably 50-150 dg/min., and 1-10% by weight of a polyethylene glycol having a molecular weight in the range of 1000 to 6000.

In a preferred embodiment, the concentrate composition contains 3-7 % by weight of polyethylene glycol.

The polyethylene of the physical admixture fed to the extruder is a so-called linear low density polyethylene. Such polymers, which are known in the art, are copolymers of ethylene with at least one $C_4$ -$C_{10}$ higher alpha-olefin, especially copolymers of ethylene with butene-1, hexene-1 and/or octene-1. The density of the polymers is in the range of 0.910-0.930 g/cm³ and especially in the range of 0.915-0.925 g/cm³. The melt index is less than 10 dg/min and especially in the range of 0.5 to 5 dg/min. Such polymers may generally be referred to as film-grade polymers. Linear low density polyethylene may be manufactured by polymerization of the monomers in the presence of a coordination catalyst.

The characteristics of the second polymer differ from those of the polyethylene in that the second polymer has a shear viscosity that is not more than 30% of the shear viscosity of the polyethylene. As used herein, shear viscosity is determined at 200°C at a shear rate of 400 sec⁻¹. In embodiments, the shear viscosity of the second polymer is 5-15% of that of the polyethylene.

The second polymer is a normally solid thermoplastic polymer and may include materials frequently referred to as solid waxes but does not include materials that are liquids at ambient temperatures and pressures; the blends are physical admixtures and are therefore capable of separation into the respective components at ambient temperatures.

In preferred embodiments, the second polymer is selected from the group consisting:

A. homopolymers and copolymers of unsaturated hydrocarbons;

B. copolymers of an alpha-olefin having the formula $R-CH = CH_2$, where R is a radical selected from the class consisting of hydrogen and alkyl radicals having from 1 to 8 carbon atoms, with alpha,beta-ethylenically unsaturated acids having from 3 to 8 carbon atoms, and esters and anhydrides thereof, such acids being mono-, di, or polycarboxylic acids, the moieties being randomly or non-randomly distributed in the polymer chain and being 0.5-50% by weight of the copolymer, any other copolymerized monomer being mono-ethylenically unsaturated;

C. ionomeric polymers derived from the copolymers of (B); and

D. graft copolymers obtained by grafting 0.1 to 5 percent by weight of alpha-beta unsaturated carboxylic acids having 3 to 8 carbon atoms or an unsaturated carboxylic acid anhydride onto a preformed backbone derived from ethylene or ethylene and $C_3$ to $C_8$ alpha-olefin, in which polyolefin backbone any other optionally copolymerized monomer component is mono-ethylenically unsaturated.

In particularly preferred embodiments, the second polymer is selected from the group consisting of homopolymers and copolymers of hydrocarbon alpha-olefins having 2-10 carbon atoms. For instance the homopolymers may be homopolymers of ethylene, propylene and butene-1, and the copolymers may be copolymers of ethylene with $C_3$ -$C_{10}$ higher alpha-olefins, especially copolymers of ethylene with butene-1, hexene-1 and/or octene-1. Preferably, the second polyolefin is a homopolymer of ethylene and/or a copolymer of ethylene and a $C_4$ -$C_{10}$ higher alpha-olefin.

In alternative embodiments, the polymer is selected from the group consisting of:

(i) ethylene/acrylic acid or ethylene/methacrylic acid copolymers, e.g. Nucrel* copolymers;

(ii) ethylene/vinyl acetate copolymers e.g. Elvax* copolymers; and

(iii) ionomeric polymers derived from ethylene/acrylic acid or ethylene/methacrylic acid copolymers e.g. Surlyn* ionomers.

* denotes trade mark

The physical admixtures fed to the extruder contain a polyethylene glycol. Polyethylene glycols are known in the art and range from low molecular weight oily liquids to high molecular weight waxy solids. However only a few of the known polyethylene glycols may be used in the physical admixtures fed to the extruder in the process of the present invention. Such polyethylene glycols have a molecular weight in the range of 1000 to 6000, especially 2500 to 4500. Polyethylene glycols available commercially typically are assigned a "grade" which approximates the average molecular weight of the polyethylene glycols in the commercially composition. The compositions of polyethylene glycol and second polymer contain 0.5 to 10% and especially 1 to 5% of the polyethylene glycol.

The physical admixtures fed to the extruder may also contain an organic peroxide, which as used herein includes hydroperoxides, especially a bis(tert. alkyl peroxy alkyl) benzene, dicumyl peroxide or acetylenic diperoxy compound. Other organic peroxides are known to those skilled in the art, including t-butyl hydroperoxide and di-t-butyl peroxide. The organic peroxides used in the process of the present invention have a half-life at 150°C of from about one minute to about 120 minutes. 2,5-Dimethyl-2,5 bis(tert. butyl peroxyisopropyl)benzene is a preferred organic peroxide and is available commercially under the trade mark Vulcup from Hercules Incorporated. Another preferred organic peroxide is 2,5-dimethyl-2,5-di-(t-butylperoxy)hexyne-3 which is available commercially under the trade mark Lupersol 130 from Lucidol Division of Pennwalt Corporation. Any such organic peroxide in the admixture fed to the extruder is in the form of a composition with the second polymer.

A co-curing agent may be incorporated into the polyethylene by means of the second polymer i.e. either separately from or admixed with the organic peroxide. Examples of co-curing agents include triallyl cyanurate, triallyl isocyanurate and 1,2-polybutadiene.

Both the organic peroxide, if present, and the polyethylene glycol are in the form of a composition with the second polymer. Such compositions may be in the form of a coating of polyethylene glycol and organic peroxide on the second polymer or a blend with the second polymer, or a combination thereof. Alternatively, the organic peroxide may be as a composition with the second polymer and the polyethylene glycol may be as a composition with another second polymer, the polymers being the same or different. Techniques for forming compositions of organic peroxide and polyethylene glycol with the second polymer are known in the art. Such methods include melt blending, coating and extrusion, and injection of the agent into the molten polyolefin and solidification of the resultant blend. The organic peroxide should be formed into the composition with the second polymer in a manner that does not result in premature reaction of organic peroxide with the second polymer.

The ratio of the polyethylene to the second polymer may be varied over a wide range, particularly from about 5:1 to about 400:1, especially 10:1 to 100:1 provided, however, that the amount of polyethylene glycol is in the range of 0.01 to 1% by weight of polyethylene and second polymer. The ratio selected will depend on a variety of factors, including the mixing capabilities of the apparatus, the concentrations of polyethylene glycol, and organic peroxide, in the second polymer and the intended concentrations in the admixture.

The admixture may contain up to 1000 ppm of organic peroxide, especially from about 25 ppm to about 1000 ppm by weight of organic peroxide. The amount of cross-linking agent will depend primarily on the desired properties of the film to be manufactured from the admixture, and on the properties of the polyethylene in the admixture.

The polyethylenes of the blend may contain a stabilizing agent e.g. an antioxidant or an ultra violet stabilizer. Examples of antioxidants are hindered phenolic antioxidants e.g. octadecyl-3,5-di-tert.butyl-4-hydroxy cinnamate and tetrakis-methylene-3-(3',5'ditert.butyl-4-hydroxyphenyl) propionate methane. Hindered phenolic antioxidants may be used in combination with a phosphite antioxidant e.g. di(stearyl)-pentaerythritol diphosphite, tris di-tert.-butyl phenyl phosphite, dilauryl thiodipropionate and bis(2,4-tert.-butylphenyl) pentaerythritol diphosphite. Examples of ultra violet stabilizers are 2-hydroxy-4-n-octoxybenzophenone, 2-(3'-tert butyl-2'-hydroxy-5'-methylphenyl)-5-chlorobenzotriazole and bis-(2,2,6,6,-tetramethyl-4-piperindyl)sebacate. Moreover, the polyethylenes of the blend may contain slip agents, anti-blocking agents, anti-static agents, pigments, nucleating or other processing aids or the like. Examples of slip agents are erucamide and stearamide, of anti-static agents are bis(hydroxyethyl) tallow amine and glycerol monooleate, and of anti-blocking agents are silica and mica. Examples of nucleating agents or other processing aids are talc, silica, fluorinated elastomers and polyolefin waxes, or the like.

As will be understood by those skilled in the art, stabilizing or other so-called non-reactive reagents may have detrimental effects on cross-linking agents and for that reason it may be preferable not to use certain combinations of additives in the polyethylene.

The particles of the polyethylene and the composition of second polymer may be any convenient shape and size and may for example be granules, powder, pellets or the like, pellets being the preferred form of the composition of second polymer. Such forms are commercially available forms of polyethylene and second polymer and/or may be obtained by known techniques e.g. grinding, melt pelletization and the like. However, it is preferred that the particles of the polyethylene be of substantially the same size as the particles of the composition of the second polymer. As the difference in size between the particles increases, so does the possibility that the two types of particles will become separated from one another during storage, transportation or other handling of the blend; such differences may be less critical if the blend is fed to an extruder shortly after preparation thereof.

The physical admixture of the polyethylene and composition of second polymer is fed to extrusion apparatus, especially an extruder of apparatus intended for the manufacture of film by a so-called blown-film process. Such apparatus is known to those skilled in the art. The admixture is fed to an extruder, heated and mixed within the extruder to form a molten polymer composition. This composition should be admixed in a uniform manner. The molten composition is extruded through an annular die to form a tube of molten polymer. The tube is then expanded and cooled so as to form film. The tubular film is then slit and wound up onto rolls.

The operation of a film process using the admixtures described herein can result in substantial increases in the rate of production of film of acceptable quality. Moreover, the admixtures can permit the manufacture of film from linear low density polyethylene using apparatus that was intended for use with conventional high pressure polyethylene, especially apparatus having a power capacity that is suitable for conventional high pressure polyethylene but is not suitable for linear low density polyethylene. Thus the versatility of such apparatus is increased.

While the blends or physical admixtures and compositions of polyethylene glycol and second polymer have been described hereinbefore with particular reference to the extrusion of film, the compositions in particular may be used in other end-uses. Such other end-uses may include injection moulding, rotational moulding, extrusion of sheet and pipe, and the like.

For the other end-uses, the blends comprise, in physical admixture, a major portion of particles of a polyethylene and a minor portion of particles of a composition of a second polymer with a polyethylene glycol, said polyethylene being a homoplymer of ethylene or a copolymer of ethylene and at least one $C_4$-$C_{10}$ higher alpha-olefin and having a density of 0.910-0.970 g/cm³ and a melt index of less than 60 dg/min, said second polymer being a normally solid thermoplastic polymer having a melting point of less than 185°C and having a shear viscosity of less than 30% of that of said polyethylene when measured at 200°C and a shear rate of 400 sec⁻¹, said composition containing 0.5 to 10%, based on the weight of second polymer, of a polyethylene glycol having a molecular weight in the range of 1000 to 6000, the amount of said polyethylene glycol being 0.01 to 1% by weight of the amount of polyethyene and second polymer.

As described hereinbefore, the blends and especially the composition of second polymer and polyethylene glycol may also contain an organic peroxide, especially a bis(tert. diperoxy compound).

Use of the blends and compositions described above may lead to improvements in the processes of such other end-uses.

As noted above, the present invention provides concentrate compositions comprising 90-99% by weight, preferably 90-98% and especially 93-97% by weight, of ethylene polymer and 1-10% by weight, preferably 2-10% and especially 3-7% by weight, of polyethylene glycol. The ethylene polymer may be a homopolymer of ethylene or a copolymer of ethylene and at least one $C_4$-$C_{10}$ higher alpha-olefin, or mixtures thereof. The polymer may have a density of 0.91-0.97 g/cm³, especially 0.92-0.935 g/cm³, and a melt index of 20-200 dg/min., especially 50-150 dg/min. The polyethylene glycol has a molecular weight of 1000 to 6000, especially 2500 to 4500.

The concentrates may be obtained by compounding polymer and polyethylene glycol using compounding apparatus equipped with an efficient mixing screw, and especially using a twin-screw extruder equipped with an intensive mixing section.

The concentrates may be blended with polymers as described hereinbefore, and used in the fabrication of film, sheet, pipe, moulded articles and the like.

The process of the present invention is further illustrated by the following examples.:

Example I

Using a blown film extrusion process equipped with a 6.35 cm screw intended for use in the extrusion of high pressure polyethylene, SCLAIR 13J4 polyethylene was extruded into film. The polyethylene had been admixed with a concentrate containing polyethylene glycol and, in some instances, a concentrate containing Lupersol 130 organic peroxide. SCLAIR 13J4 polyethylene is an ethylene/butene-1 copolymer having a density of 0.926 g/cm³ and a melt index of 1.0 dg/min.

The results obtained are given in Table I.

Runs 2 to 4 show the effect of different concentrations of Carbowax 3350 polyethylene glycol, whereas Run 5 shows the negligible effect obtained using Carbowax 14 000 polyethylene glycol. Runs 6 to 8 show effects of different polymers in the concentrate.

The organic peroxide is intended to improve melt strength of the extruded polymer admixture, rather than the processability of the admixture in the extruder.

Example II

The procedure of Example I was repeated using (i) SCLAIR 13J4 polyethylene and (ii) a blend of 80% SCLAIR 13J4 polyethylene and 20% Union Carbide 3310 high pressure polyethylene (density 0.924 g/cm³, melt index 1.7 dg/min), as the polyethylene. In all runs, the polyethylene glycol was Carbowax 3350 in SCLAIR 2316 polyethylene.

The results obtained are given in TABLE II.

The results show that the addition of polyethylene glycol to the blend had less effect than the addition to the linear low density polyethylene (SCLAIR 13J4). The control run of the latter had higher power requirements than the control run of the blend, thereby showing that the present invention has greater effect with less readily processable polymers.

Example III

The procedure of Example I was repeated using a 11.43 cm extruder, instead of the 6.35 cm extruder, with a length : diameter of 24:1 and a blend of 80% Dow 2045 linear low density polyethylene (density 0.920 g/cm³, melt index 1.0 dg/min) and 20% Union Carbide 6802 high pressure polyethylene(density 0.930 g/cm³, melt index 2.5 dg/min) as the polyethylene.

The results obtained are given in TABLE III.

Run 17, which is a comparative run, shows the maximum output of the extruder, which was limited by a maximum amperage rating of 235 amps. The use of processes of the present invention resulted in increases in output of up to 71% (Run 21).

Example IV

The procedure of Example I was repeated using a 8.89 cm extruder with a length : diameter of 24:1 and equipped with a Hartig MC-4 screw. The polyethylene was a blend of 90% Esso 1010 granular linear low density polyethylene (melt index 1.0 dg/min) and 10% Dow 495 high pressure polyethylene (density 0.921 g/cm³, melt index 0.8 dg/min).

The results obtained are given in Table IV.

This example shows the use of the present invention with blends of granular polyethylene and pelletized polyethylene.

## TABLE I

| Run No. | Concentrate | Amount of Concentrate (1%) | Speed (rpm) | Screw Amps | Output (kg/hr) |
|---|---|---|---|---|---|
| 1 | – | – | 50 | 48 | 38 |
|   |   |   | 70 | 54 | 54 |
|   |   |   | 90 | 59 | 70 |
| 2 | 0.5% PEG in 2316 | 1.5) ) | 50 | 45 | 38 |
|   | 3300 PPM PEROX in 2114 | 1.5) |   |   |   |
| 3 | 5% PEG plus 2500 PPM PEROX in 2114 | 0.5 | 50 | 22 | 19 |
|   |   |   | 70 | 32 | 38 |
| 4 | 1.0% PEG in 2316 | 1.5) ) | 50 | 37 | 34 |
|   | 3300 PPM PEROX in 2114 | 1.5) |   |   |   |
| 5 | 1.5% PEG in 2316 | 1.5) ) | 50 | 47 | 38 |
|   | 3300 PPM PEROX in 2114 | 1.5) |   |   |   |
| 6 | 1.25% PEG plus 3300 PPM PEROX in 2316 | 1.5 | 50 | 34 | 34 |
|   |   |   | 70 | 42 | 48 |
|   |   |   | 90 | 48 | 61 |
| 7 | 1.25% PEG in 13J4 | 1.5 | 50 | 45 | 37 |
|   |   |   | 70 | 54 | 54 |
|   |   |   | 90 | 58 | 69 |
| 8 | 1.25% PEG in 2316 | 1.5 | 50 | 33 | 32 |
|   |   |   | 70 | 41 | 46 |
|   |   |   | 90 | 47 | 58 |

Note: Peg = Carbowax 3350 (MW 3000 -3700) in all runs except Run 5 where Carbowax 14 000 - (polyethylene glycol, MW = 14 000) was used.

2114 and 2316 = SCLAIR 2114 and SCLAIR 2316 polyethylene, respectively. Both polymers have a shear viscosity of less than 50% of that of the polyethylene. SCLAIR 2114 polyethylene has a density of 0.924 $g/cm^3$ and a melt index of 53 dg/min. SCLAIR 2316 polyethylene has density of 0.930 $g/cm^3$ and a melt index of 75 dg/min.

PEROX = Lupersol 130 organic peroxide.

Screw Amps = amperage of screw motor Runs 1 and 5 are comparative runs.

## TABLE II

| Run No. | Polyethylene | PEG in Concentrate (%) | Amount of Concentrate (%) | Screw Speed (rpm) | Screw Amps | Output (kg/hr) |
|---------|--------------|------------------------|---------------------------|-------------------|------------|----------------|
| 9* | 13J4 | - | - | 50 | 48 | 38 |
| 10 | 13J4 | 1 | 1.5 | 50 | 34 | 33 |
| 11 | 13J4 | 2 | 1.0 | 50 | 30 | 32 |
| 12 | 13J4 | 3 | 1.0 | 50 | 20 | 20 |
| 13 | Blend | - | - | 50 | 42 | 39 |
| 14 | Blend | 1 | 1.5 | 50 | 37 | 38 |
| 15 | Blend | 2 | 1.0 | 50 | 35 | 35 |
| 16 | Blend | 3 | 1.0 | 50 | 27 | 27 |

\* As shown in Run 1.

## TABLE III

| Run No. | Concentrate | Amount of Concentrate (%) | Screw Speed (rpm) | Screw Amps | Output (kg/hr) |
|---|---|---|---|---|---|
| 17 | - | - | 55 | 235 | 207 |
| 18 | 3% PEG plus 3300 PPM PEROX in 2316 | 2 | 55 | 225 | 207 |
| 19 | 3% PEG plus 3300 PPM PEROX in 2316 | 2 | 64 | 235 | 242 |
| 20 | 5% PEG plus 3300 PPM PEROX in 2316 | 2 | 64 | 195 | 240 |
| 21 | 5% PEG plus 3300 PPM PEROX in 2316 | 2 | 85 | 235 | 354 |

## TABLE IV

| Run No. | Concentrate | Amount of Concentrate (%) | Screw Speed (rpm) | Screw Amps | Output (kg/hr) |
|---|---|---|---|---|---|
| 22 | - | - | 45 | 137 | 118 |
| 23 | 3% PEG plus 3300 PPM PEROX in 2316 | 1.5 | 45 | 127 | 116 |

## Claims

1. In a process for the manufacture of film from a polymer of ethylene, said process comprising feeding said polymer to an extruder adapted for the manufacture of film, melting said polymer and extruding molten polymer through an annular die, expanding the resultant tube of molten polymer and then cooling said tube to form film, the improvement comprising feeding to the extruder a blend comprising, in physical admixture, a major portion of particles of a polyethylene and a minor portion of particles of a composition of a second polymer with a polyethylene glycol, said polyethylene being a copolymer of ethylene and at least one $C_4$ -$C_{10}$ higher alpha-olefin and having a density of 0.910-0.930 g/cm$^3$ and a melt index of less than 10 dg/min, said second polymer being a normally solid thermoplastic polymer having a melting point of less than 185°C and having a shear viscosity of less than 30% of that of said polyethylene when measured at 200°C and a shear rate of 400 sec$^{-1}$, said composition containing 0.5 to 10%, based on the weight of second polymer, of a polyethylene glycol having a molecular weight in the range of 1000 to 6000, the amount of said polyethylene glycol being 0.01 to 1% by weight of the amount of polyethylene and second polymer.

2. The process of Claim 1 in which the second polymer is selected from the group consisting of:

(A) homopolymers and copolymers of unsaturated hydrocarbons;

(B) copolymers of an alpha-olefin having the formula R-CH=CH$_2$, where R is a radical selected from the class consisting of hydrogen and alkyl radicals having from 1 to 8 carbon atoms, with alpha,beta-ethylenically unsaturated acids having from 3 to 8 carbon atoms, and esters and anhydrides thereof, such acids being mono-,di-or polycarboxylic acids, the moieties being randomly or non-randomly distributed in the polymer chain and being 0.5-50% by weight of the copolymer, any other copolymerized monomer being mono-ethylenically unsaturated;

(C) ionomeric polymers derived from the copolymers of (B); and

(D) graft copolymers obtained by grafting 0.1 to 5 percent by weight of alpha,beta unsaturated carboxylic acids having 3 to 8 carbon atoms or an unsaturated carboxylic acid anhydride onto a preformed backbone derived from ethylene or ethylene and C$_3$ to C$_8$ alpha-olefin, in which polyolefin backbone any other optionally copolymerized monomer component is mono-ethylenically unsaturated.

3. The process of Claim 1 in which the second polymer is a homopolymer of ethylene or copolymer of ethylene and at least one $C_4$ -$C_{10}$ alpha-olefin.

4. The process of any one of Claims 1-3 in which the polyethylene has a melt index in the range of 0.5 to 5 dg/min.

5. The process of any one of Claims 1-4 in which the polyethylene has a density in the range of 0.915 to 0.925 g/cm$^3$.

6. The process of any one of Claims 1-5 in which the shear viscosity of the second polymer is 5-15% of that of the polyethylene.

7. The process of any one of Claims 1-6 in which the composition contains 1 to 5%, based on the weight of second polymer, of a polyethylene glycol.

8. The process of any one of Claims 1-7 in which the ratio of polyethylene to second polymer is in the range of 5:1 to 400:1.

9. The process of any one of Claims 1-8 in which the polyethylene glycol has a molecular weight in the range of 2500 to 4500.

10. The process of any one of Claims 1-9 in which a composition of organic peroxide and second polymer is also admixed with the polyethylene.

11. The process of Claim 10 in which the organic peroxide is formed into the same composition as the polyethylene glycol.

12. The process of Claim 10 or Claim 11 in which the organic peroxide is selected from the group consisting of bis(tert. alkyl peroxy alkyl) benzene, dicumyl peroxide and acetylenic diperoxy compounds.

13. A blend comprising, in physical admixture, a major portion of particles of a polyethylene and a minor portion of particles of a composition of a second polymer with a polyethylene glycol, said polyethylene being a homopolymer of ethylene or a copolymer of ethylene and at least one $C_4$ -$C_{10}$ higher alpha-olefin and having a density of 0.910-0.960 g/cm$^3$ and a melt index of less than 60 dg/min, said second polymer being a normally solid thermoplastic polymer having a melting point of less than 185°C and having a shear viscosity of less than 30% of that of said polyethylene when measured at 200°C and a shear rate of 400 sec$^{-1}$, said composition containing 0.5 to 10%, based on the weight of second polymer, of a polyethylene glycol having a molecular weight in the range of 1000 to 6000, the amount of said polyethylene glycol being 0.01 to 1% by weight of the amount of polyethylene and second polymer.

14. A blend comprising, in physical admixture, a major portion of particles of a polyethylene and a minor portion of particles of a composition of a second polymer with a polyethylene glycol, said polyethylene being a copolymer of ethylene and at least one $C_4$ -$C_{10}$ higher alpha-olefin and having a density of 0.910-0.930 g/cm$^3$ and a melt index of less than 10 dg/min, said second polymer being a normally solid thermoplastic polymer having a melting point of less than 185°C and having a shear viscosity of less than 30% of that of said polyethylene when measured at 200°C and a shear rate of 400 sec$^{-1}$, said composition containing 0.5 to 10%, based on the weight of second polymer, of a polyethylene glycol having a molecular weight in the range of 1000 to 6000, the amount of said polyethylene glycol being 0.01 to 1% by weight of the amount of polyethylene and second polymer.

15. The blend of Claim 13 or Claim 14 in which the second polymer is selected from the group consisting of:

(A) homopolymers and copolymers of unsaturated hydrocarbons;

(B) copolymers of an alpha-olefin having the formula $R-CH=CH_2$, where R is a radical selected from the class consisting of hydrogen and alkyl radicals having from 1 to 8 carbon atoms, with alpha,beta-ethylenically unsaturated acids having from 3 to 8 carbon atoms, and esters and anhydrides thereof, such acids being mono-,di-or polycarboxylic acids, the moieties being randomly or non-randomly distributed in the polymer chain and being 0.5-50% by weight of the copolymer, any other copolymerized monomer being monoethylenically unsaturated;

(C) ionomeric polymers derived from the copolymers of (B); and

(D) graft copolymers obtained by grafting 0.1 to 5 percent by weight of alpha,beta unsaturated carboxylic acids having 3 to 8 carbon atoms or an unsaturated carboxylic acid anhydride onto a preformed backbone derived from ethylene or ethylene and $C_3$ to $C_8$ alpha-olefin, in which polyolefin backbone any other optionally copolymerized monomer component is mono-ethylenically unsaturated.

16. The blend of any one of Claims 13-15 in which the polyethylene has a melt index in the range of 0.5 to 5 dg/min.

17. The blend of any one of Claims 13-16 in which the polyethylene has a density in the range of 0.915 to 0.925 g/cm³.

18. The blend of any one of Claims 13-17 in which the shear viscosity of the second polymer is 5-15% of that of the polyethylene.

19. The blend of any one of Claims 13-18 in which the composition contains 1 to 5%, based on the weight of second polymer, of a polyethylene glycol.

20. The blend of any one of Claims 13-19 in which the ratio of polyethylene to second polymer is in the range of 5:1 to 400:1.

21. The blend of any one of Claims 13-20 in which the polyethylene glycol has a molecular weight in the range of 2500 to 4500.

22. The blend of any one of Claims 13-21 in which the second polymer is a homopolymer of ethylene or copolymer of ethylene and at least one $C_4$ -$C_{10}$ alpha-olefin.

23. The blend of any one of Claims 13-22 in which a composition of organic peroxide and second polymer is also admixed with the polyethylene.

24. The blend of Claim 23 in which the organic peroxide is formed into the same composition as the polyethylene glycol.

25. The blend of Claim 23 or Claim 24 in which the organic peroxide is selected from the group consisting of bis(tert. alkyl peroxy alkyl) benzene, dicumyl peroxide and acetylenic diperoxy compounds.

26. A concentrate composition comprising 90-99% by weight of an ethylene polymer selected from the group consisting of homopolymers of ethylene and copolymers of ethylene and at least one $C_4$ -$C_{10}$ higher alpha-olefin, and mixtures thereof, said polymer having a density of 0.91-0.97 g/cm³ and a melt index of 20-200 dg/min, and 1-10% by weight of a polyethylene glycol having a molecular weight in the range of 1000 to 6000.

27. The concentrate composition of Claim 26 in which the amount of polyethylene glycol is 3-7% by weight.

28. The concentrate of Claim 26 or Claim 27 in which the density of the ethylene polymer is in the range of 0.920-0.935 g/cm³.